# DEMANDE DE BREVET EUROPEEN

(11) **EP 1 128 308 A1**
(43) Date de publication de la demande: **29.08.2001**
(21) Numéro de dépôt: 01400453.5
(22) Date de dépôt: 21.02.2001
(51) Int. Cl.: G06F 17/60

(54) **Procédé de commande de prestations de transport à la demande, notamment de réservation de courses de taxis**

(30) Priorité: 24.02.2000 FR 0002338
(71) Demandeur: Société Nouvelle de Groupement de Taxis, 92110 Clichy (FR)
(72) Inventeur: Metz, Serge, 95160 Montmorency (FR); Metz, Cyril, 92600 Asnieres S/Seine (FR)
(74) Mandataire: Dupuis-Latour, Dominique

(57) **Abrégé**

Un client local (C) émet auprès d'un exploitant local (E) une requête de prestation de transport destinée à être exécutée par un exploitant distant (E'). Les étapes sont les suivantes :
a) émission par le client de la requête (REQ) auprès de l'exploitant local,
b) identification et authentification du client par l'exploitant local,
c) émission par l'exploitant local, vers un centre répartiteur (R), d'un premier message (MSG1) incluant un numéro de référence (#REF) et des paramètres descripteurs de la prestation (PARAM),
d) par le centre répartiteur, réception du premier message, authentification de ce premier message, sélection d'un exploitant distant approprié en fonction desdits paramètres descripteurs de la prestation, et émission vers l'exploitant distant ainsi sélectionné d'un second message (MSG2) incluant un numéro d'autorisation de transaction (#AUT),
e) mise en communication du client avec l'exploitant distant,
f) présentation des détails (DET) de la requête par le client à l'exploitant distant, et établissement par ce dernier d'une réservation correspondante.

## Description

L'invention concerne les transports à la demande, typiquement (mais de manière non limitative) les transports individuels ou semi-collectifs de voyageurs par des véhicules tels que taxis ou minibus.

Dans la présente description, on prendra comme exemple les courses de taxi, mais ce cas particulier, comme on le comprendra, n'est nullement spécifique et n'est donc pas limitatif de l'invention.

Les flottes de taxis sont gérées par des prestataires que l'on désignera dans la suite de la description sous le terme "exploitants de transport", qui assurent la centralisation des commandes de taxis dans une même ville ou une même région. Ces exploitants disposent d'une base de clientèle connue, par exemple des personnes ou des sociétés abonnées qui s'adressent à eux pour la commande des taxis, dont les prestations sont généralement facturées directement et ultérieurement au client par l'exploitant, par exemple sous forme d'un relevé mensuel.

L'invention concerne la situation où le client souhaite réserver un taxi non plus sur la zone (ville ou région) couverte par l'exploitant auquel il est affilié, mais dans une autre région, par exemple le client d'un exploitant parisien souhaitant réserver un taxi à Londres.

Jusqu'à présent, une telle demande est gérée par chacun des exploitants, qui s'adresse à un autre exploitant dont il est le partenaire. On appellera par la suite "exploitant distant" cet autre exploitant (qui exécutera la prestation demandée par le client) et "exploitant local" l'exploitant auquel est affilié le client (exploitant qui recueillera et transmettra la commande mais n'exécutera pas la prestation).

L'exploitant local et l'exploitant distant concernés s'entendent alors sur les modalités de la réservation ainsi que celles du règlement et de la manière de l'imputer au client.

Cette manière de procéder suppose, pour pouvoir couvrir une zone géographique étendue, l'établissement d'un réseau entre de très nombreux exploitants, chacun d'entre eux étant en relation biunivoque avec chacun des autres, tant pour l'organisation des réservations que pour la facturation.

Ainsi, si l'on veut par exemple couvrir les capitales et les principales villes européennes, ceci suppose un réseau de plusieurs dizaines d'exploitants, impliquant une multiplicité de relations entre eux afin que chacun puisse être relié à tous les autres.

Cette complication dans l'organisation est encore accrue, dans un cadre international, par la multiplicité des devises impliquées dans les facturations réciproques entre exploitants, de sorte que chacun des exploitants peut être amené à gérer des relations avec plusieurs dizaines de correspondants dans une dizaine de devises différentes.

Cette complexité conduit ainsi à une lourdeur importante dans la gestion des réservations des courses, et donc à des surcoûts importants qui devront être *in fine* répercutés au client sous une forme ou sous une autre.

L'un des buts de l'invention est de proposer un nouveau procédé de commande de prestations de transport à la demande, notamment de réservation de courses de taxi, permettant d'éviter l'organisation complexe des réseaux de partenaires actuels et de simplifier, pour chaque exploitant, la gestion des réservations internationales, à moindre coût pour le client et en offrant toutes les garanties, notamment de paiement des prestations, pour les exploitants qui seront amenés à les fournir.

À cet effet, dans un procédé où un client local émet auprès d'un exploitant local une requête de prestation de transport destinée à être exécutée par un exploitant distant, l'invention est caractérisée par les étapes suivantes :
a) émission par le client de la requête auprès de l'exploitant local,
b) identification et authentification du client par l'exploitant local,
c) émission par l'exploitant local, vers un centre répartiteur, d'un premier message incluant un numéro de référence et des paramètres descripteurs de la prestation,
d) par le centre répartiteur, réception du premier message, authentification de ce premier message, sélection d'un exploitant distant approprié en fonction desdits paramètres descripteurs de la prestation, et émission vers l'exploitant distant ainsi sélectionné d'un second message incluant un numéro d'autorisation de transaction,
e) mise en communication du client avec l'exploitant distant,
f) présentation des détails de la requête par le client à l'exploitant distant, et établissement par ce dernier d'une réservation correspondante.

Très avantageusement, il est prévu une étape ultérieure g) d'enregistrement par l'exploitant distant, après exécution de la prestation, d'informations comptables propres à permettre une facturation ultérieure de cette prestation. Ces informations comptables peuvent notamment inclure ledit numéro d'autorisation de transaction.

Le procédé peut alors être suivi d'étapes ultérieures de : h) transmission, différée et groupée, desdites informations comptables de l'exploitant distant au centre répartiteur, i) retransmission de ces informations comptables par le centre répartiteur aux exploitants locaux concernés et j) imputation par l'exploitant local de ces informations comptables au client concerné.

Dans ce dernier cas, il est en outre prévu des étapes ultérieures de :
k) facturation, accompagnée dudit numéro d'autorisation de transaction produit à l'étape d), de la prestation au centre répartiteur par l'exploitant distant,
I) refacturation, accompagnée dudit numéro de référence produit à l'étape c), de la prestation à l'exploitant local par le centre répartiteur, à partir dudit numéro d'autorisation de transaction, et
m) facturation de la prestation au client par l'exploitant local, à partir des informations comptables et dudit numéro de référence reçus du centre répartiteur.

On peut avantageusement prévoir alors une compensation par le centre répartiteur, pour chaque exploitant, entre les prestations facturées au centre répartiteur par cet exploitant et les prestations refacturées à cet exploitant par le centre répartiteur.

On va maintenant décrire un exemple de mise en oeuvre de l'invention, en référence aux dessins annexés.

La figure 1 est une représentation schématique d'un réseau organisé selon les enseignements de l'invention.

La figure 2 illustre les différentes étapes de prise de la réservation.

La figure 3 illustre les différentes étapes de la séquence d'établissement de la communication finale entre le client et l'exploitant distant.

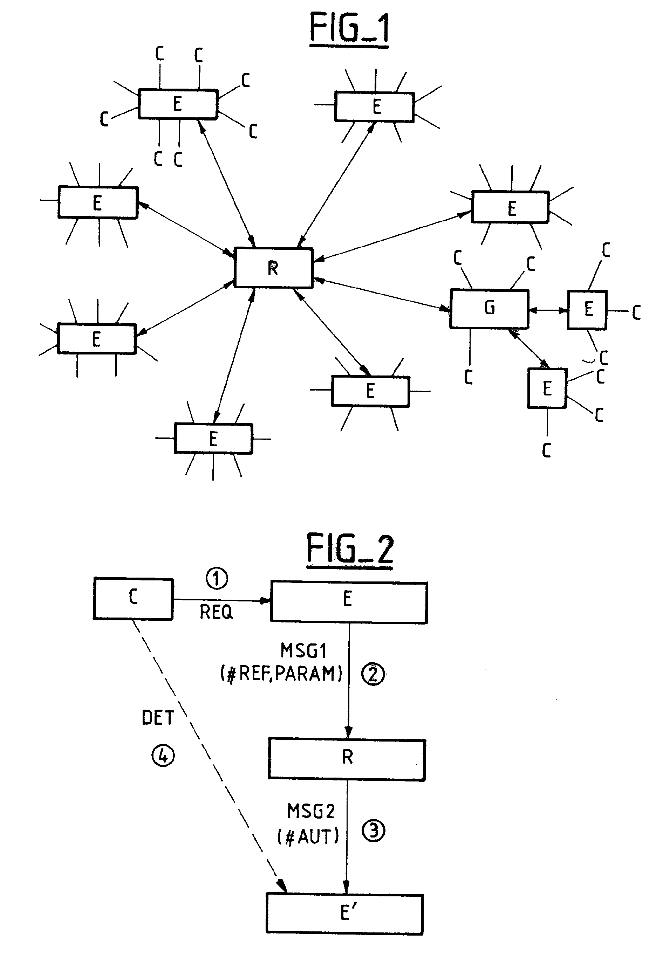

Sur la figure 1, on a représenté schématiquement le réseau associant les différents exploitants de transport E dont chacun regroupe une base de clientèle schématisée par les clients C.

On assimilera à un exploitant de transport les groupements G fédérant une pluralité d'exploitants E (par exemple les différentes villes d'une même région). Cette configuration implique seulement un niveau d'échange supplémentaire sans modification des principes de mise en oeuvre de l'invention.

Jusqu'à présent, chacun des exploitants E, lorsque l'un de ses clients lui demandait une réservation hors de la zone couverte par cet exploitant local, faisait appel directement à l'un de ses correspondants couvrant la zone demandée. Une telle manière de procéder implique un maillage complet de relations biunivoques entre tous les exploitants, avec tous les inconvénients qui ont été évoqués plus haut dans l'introduction de la présente description.

L'invention propose, essentiellement, d'organiser ce réseau d'exploitants sous forme d'un réseau en étoile autour d'un opérateur R, ci-après désigné "centre répartiteur", faisant fonction de plaque tournante entre les différents exploitants locaux pour coordonner la gestion des réservations impliquant deux d'entre eux.

La figure 2 illustre plus précisément la manière dont le centre répartiteur R va gérer une réservation.

Les différents opérateurs impliqués sont :
- C :: le client à l'origine de la demande de réservation.
- E :: l'exploitant ("exploitant local") auquel est affilié le client C, qui recevra de celui-ci la demande de prestation et qui facturera ultérieurement la prestation - mais qui ne l'exécutera pas.
- R :: le centre répartiteur.
- E':: un autre exploitant ("exploitant distant"), auquel n'est pas affilié le client C, qui exécutera la prestation demandée mais qui ne la facturera pas au client.

La *première étape* ① consiste, pour le client C, à entrer en relation avec l'exploitant local E et à lui présenter sa demande de réservation sous forme d'une requête REQ, par téléphone ou éventuellement par voie télématique.

Le client indique son numéro de compte auprès de l'exploitant local E et identifie sommairement la prestation demandée (ville concernée, date et heure).

À partir de ces premières informations, l'exploitant local identifie le client, par exemple par recherche dans sa base de données, et l'authentifie, c'est-à-dire vérifie que son identité correspond bien à un client en compte, que la personne appelante est bien habilitée à effectuer des réservations qui seront imputées sur ce compte, que des réservations internationales sont bien autorisées pour ce client, etc., de manière que le règlement ultérieur de la prestation puisse intervenir sans réserve.

Une fois le client ainsi identifié et authentifié, la *deuxième étape* ② consiste pour l'exploitant local E à entrer en contact avec le centre répartiteur R, par téléphone ou par voie télématique, et transmettre à ce dernier un message MSG1 comportant :
- un numéro de référence #REF, qui est un numéro sous un format quelconque, propre à l'exploitant local E, permettant d'identifier la demande (à la manière d'un numéro de bon de commande) et qui peut être un simple numéro chronologique,
- des paramètres PARAM correspondant aux informations sommaires adressées par le client, à savoir l'indication de la ville, de la date et de l'heure,
- éventuellement, un identifiant d'exploitant, permettant au centre R recevant un message de savoir de quel exploitant local provient le message ; cette identification de l'exploitant appelant peut toutefois être remplacée par d'autres moyens, par exemple dans le cas d'un appel téléphonique en utilisant la présentation automatique du numéro de l'appelant qui permet de reconnaître immédiatement celui-ci avant même le décroché.

La phase active de la procédure est alors terminée pour l'exploitant local E, qui restera entièrement passif dans la suite du processus (on expliquera plus bas de quelle manière).

La *troisième* étape ③ consiste, pour le centre répartiteur R, à établir une liaison avec un exploitant distant E' choisi en fonction des paramètres PARAM, et à adresser à ce dernier, par voie téléphonique ou télématique, un message MSG2, contenant simplement :
- un numéro d'autorisation #AUT, indiquant à l'exploitant distant E' que la réservation qu'il va être amené à gérer est une réservation pour un client qui a bien été identifié et authentifié par un exploitant local du réseau ; par ce message, le centre répartiteur indique donc à l'exploitant distant E' sollicité que le centre répartiteur R a identifié un appel d'un exploitant local du réseau, exploitant local qui a lui-même identifié et authentifié son client.

La *quatrième étape* ④ consiste à mettre le client C en relation téléphonique ou télématique (la relation téléphonique étant toutefois plus appropriée) avec l'exploitant distant E'. Le client C expose alors à ce dernier les détails DET de sa demande : localisation détaillée des points de départ et d'arrivée, modalités de prise en charge, type de véhicule souhaité, etc. L'exploitant distant E' (qui, en pratique, est seul à bien connaître sa ville ou sa région, sa flotte de véhicules, les possibilités des chauffeurs, etc.) enregistre la réservation, avec toutes ces modalités détaillées ; il adjoint par ailleurs à cette réservation le numéro d'autorisation #AUT qui lui a été communiqué par le centre répartiteur R et qui constituera pour lui la garantie qu'il s'agit d'un client authentifié, lui assurant donc la sécurité du règlement de la prestation réservée.

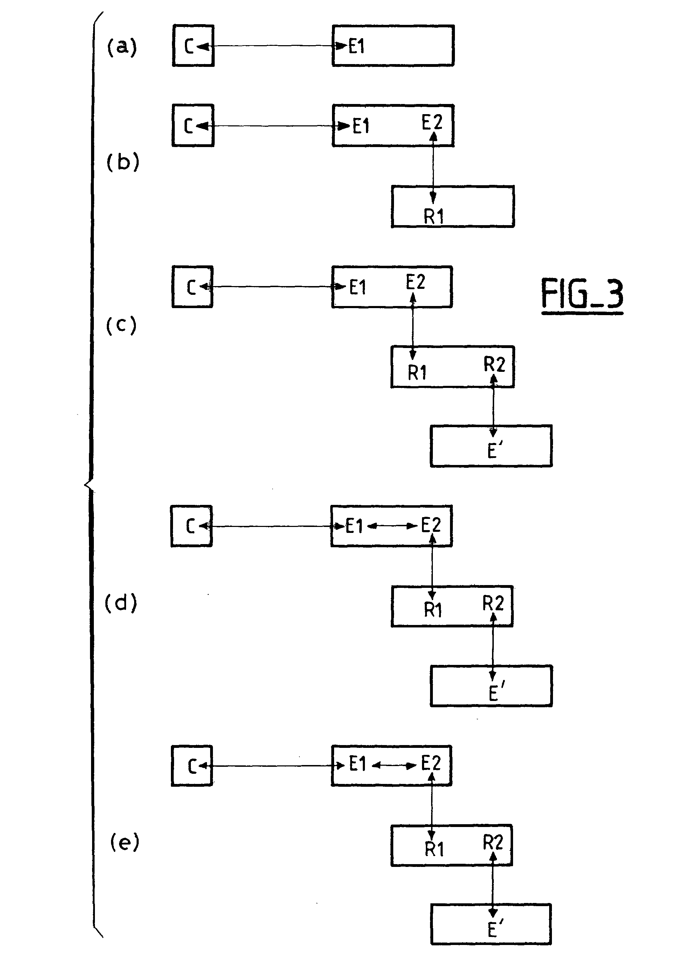

La figure 3 précise la manière dont est établie la liaison entre le client et l'exploitant distant E' pendant cette quatrième étape (on prendra l'exemple d'une liaison téléphonique).

Vu du client, après que celui-ci ait appelé l'exploitant local auquel il est affilié pour lui présenter sa requête, la communication est mise en attente, puis routée vers l'exploitant distant E', puis rétablie, et le client a alors l'impression de se trouver en communication directe avec l'exploitant distant E'.

En réalité, cette mise en communication entre C et E' fait intervenir une succession de liaisons, qui peuvent être toutefois réalisées assez simplement sur le plan technique au moyen de postes téléphoniques à deux lignes utilisables simultanément, avec possibilité d'aboutement des deux lignes au niveau du poste.

Ainsi, à l'étape *(a),* une liaison est établie entre le client C et une première ligne E1 de l'exploitant local (correspondant à la première étape de la figure 2).

À *l'étape (b)*, une autre liaison est établie entre une deuxième ligne E2 de l'exploitant local et une première ligne R1 du centre répartiteur (correspondant à la deuxième étape de la figure 2).

A *l'étape (c),* une autre liaison encore est établie entre une deuxième ligne R2 du centre répartiteur et l'exploitant distant E' (correspondant à la troisième étape de la figure 2).

Ces trois liaisons simultanées sont ensuite aboutées au cours de la quatrième étape de la figure 2, après un échange technique entre le centre répartiteur et l'exploitant local indiquant que la communication a été correctement établie avec l'exploitant distant :
- à l*'étape (d),* l'exploitant local aboute les deux lignes E1 et E2, ce qui a pour effet de mettre le client C en liaison avec R1.
- à *l'étape (e),* le centre répartiteur aboute les deux lignes R1 et R2, ce qui a *pour* effet d'achever la mise en communication du client avec l'exploitant distant E via l'exploitant local et via le centre répartiteur.

Une fois la communication entre C et E' achevée, le raccrochage par le premier d'entre eux rétablit l'ensemble des postes à leur situation initiale.

Avant d'aborder les aspects relatifs à la facturation, on peut déjà remarquer que le nouveau procédé de réservation selon l'invention apporte un certain nombre d'avantages déterminants par rapport aux techniques employées jusqu'à présent, notamment :
- l'exploitant local garde la maîtrise complète de sa liste de clients, il n'a besoin de la communiquer ni aux autres exploitants membres du réseau, ni au centre répartiteur ;
- aucune modification du format des bases de données n'est nécessaire, chaque exploitant peut organiser et conserver sa base de données comme il l'entend avec les informations qu'il souhaite, sans aucune contrainte d'unification ou autre du fait de l'appartenance au réseau ;
- l'anonymat des transactions est préservé : l'exploitant local ne communique au réseau aucune information sur son client, car il n'adresse au centre répartiteur qu'un numéro de référence (qui peut être un simple numéro chronologique) et des indications très sommaires sur la ville, la date et l'heure de la prestation demandée ;
- l'affiliation d'un opérateur local au réseau n'implique aucune adaptation technique ni aucune modification du mode opératoire, il lui suffit de souscrire un contrat avec le centre répartiteur et d'utiliser une liaison téléphonique avec celui-ci ;
- l'organisation du réseau selon l'invention permet de dissocier la connaissance de la ville dans laquelle doit être effectuée la prestation (du ressort de l'opérateur distant) et la connaissance du client, qui conditionne la sécurité du paiement (du ressort de l'opérateur local auquel est affilié ce client) ; en d'autres termes, l'identification et l'authentification du client sont décentralisées auprès de l'exploitant local et n'ont besoin d'être gérées ni par l'exploitant distant ni par le centre répartiteur.

Le procédé que l'on vient d'exposer se prête parfaitement, sans complication supplémentaire, à la simplification du règlement des prestations exécutées par les différents intervenants.

Dans une mise en oeuvre simplifiée, le client peut certes régler directement le chauffeur de l'exploitant distant une fois la prestation rendue. Mais il rencontre alors les contraintes habituelles en ce qui concerne le besoin de disposer d'espèces en devises locales pour régler le chauffeur ou de ne pouvoir utiliser que des véhicules disposant de terminaux de paiement électronique, assez peu répandus.

Pour pallier ces difficultés, il est possible d'éviter au client le paiement immédiat de la prestation, en lui imputant celle-ci ultérieurement par la compagnie à laquelle il est abonné, en même temps que les autres prestations rendues par cette compagnie (l'exploitant local).

À cet effet, une fois la prestation exécutée, le chauffeur remet un reçu au client comportant le numéro d'autorisation #AUT qui avait été transmis par le centre répartiteur R, ces données étant également conservées par l'exploitant distant pour permettre la facturation ultérieure de la prestation.

Ces informations comptables ne sont pas répercutées directement à l'exploitant local auquel est affilié le client (l'exploitant distant ne connaît d'ailleurs pas nécessairement l'identité de cet exploitant local), mais sont envoyées au centre répartiteur R de préférence sous forme différée et groupée, par exemple mensuellement.

Le centre répartiteur retransmet alors ces informations comptables à l'exploitant local E concerné, en lui affectant le numéro de référence #REF qui avait été attribué par ce dernier au moment de l'émission de la réservation.

À partir de ce numéro de référence, l'exploitant local E retrouve le client concerné et impute les informations comptables sur le compte de ce dernier.

L'exploitant distant E', quant à lui, est réglé de ses prestations par le centre répartiteur, le numéro d'autorisation #AUT constituant une garantie de paiement pour chacune des prestations correspondantes.

Le centre répartiteur R, de son côté, refacture ces prestations à l'exploitant local E en y ajoutant ses propres frais d'intermédiation et les coûts des communications ; l'exploitant local étant un membre du réseau en relation contractuelle avec le centre répartiteur, la garantie du paiement est également assurée à ce niveau.

Comme on peut le voir, du point de vue des exploitants, chacun d'entre eux ne connaît qu'un seul interlocuteur (le centre répartiteur) pour la totalité des prestations rendues par d'autres membres du réseau. Ces prestations multiples et variées font l'objet d'une facturation unique, par exemple une facture mensuelle émise par le centre répartiteur, et ceci dans une devise unique.

Inversement, pour toutes les prestations accomplies par un exploitant pour le compte de clients d'autres exploitants du réseau, cet exploitant émet une facture unique, à l'ordre du centre répartiteur, également dans une devise unique.

Dans la mesure où le centre répartiteur peut être à la fois créancier et débiteur à l'égard de chacun des exploitants, il est avantageux de procéder à une compensation, le règlement n'intervenant alors que sur le solde dû, débiteur ou créditeur.

## Revendications

1. Un procédé de commande de prestations de transport à la demande, notamment de réservation de courses de taxis, dans lequel un client local (C) émet auprès d'un exploitant local (E) une requête de prestation de transport destinée à être exécutée par un exploitant distant (E'),
procédé caractérisé par les étapes suivantes :
a) émission par le client de la requête (REQ) auprès de l'exploitant local,
b) identification et authentification du client par l'exploitant local,
c) émission par l'exploitant local, vers un centre répartiteur (R), d'un premier message (MSG1) incluant un numéro de référence (#REF) et des paramètres descripteurs de la prestation (PARAM),
d) par le centre répartiteur, réception du premier message, authentification de ce premier message, sélection d'un exploitant distant approprié en fonction desdits paramètres descripteurs de la prestation, et émission vers l'exploitant distant ainsi sélectionné d'un second message (MSG2) incluant un numéro d'autorisation de transaction (#AUT),
e) mise en communication du client avec l'exploitant distant, et
f) présentation des détails (DET) de la requête par le client à l'exploitant distant, et établissement par ce dernier d'une réservation correspondante.

2. Le procédé de la revendication 1, dans lequel il est prévu une étape ultérieure de :
g) enregistrement par l'exploitant distant, après exécution de la prestation, d'informations comptables propres à permettre une facturation ultérieure de cette prestation.

3. Le procédé de la revendication 2, dans lequel les informations comptables incluent ledit numéro d'autorisation de transaction (#AUT).

4. Le procédé de la revendication 2, dans lequel il est prévu des étapes ultérieures de :
h) transmission, différée et groupée, desdites informations comptables de l'exploitant distant au centre répartiteur,
i) retransmission de ces informations comptables par le centre répartiteur aux exploitants locaux concernés, et
j) imputation par l'exploitant local de ces informations comptables au client concerné.

5. Le procédé de la revendication 4, dans lequel il est prévu une étape ultérieure de :
k) facturation, accompagnée dudit numéro d'autorisation de transaction (#AUT) produit à l'étape d), de la prestation au centre répartiteur par l'exploitant distant

6. Le procédé de la revendication 5, dans lequel il est prévu une étape ultérieure de :
I) refacturation, accompagnée dudit numéro de référence (#REF) produit à l'étape c), de la prestation à l'exploitant local par le centre répartiteur, à partir dudit numéro d'autorisation de transaction (#AUT).

7. Le procédé de la revendication 6, dans lequel il est prévu une étape ultérieure de :
m) facturation de la prestation au client par l'exploitant local, à partir des informations comptables et dudit numéro de référence (#REF) reçus du centre répartiteur.

8. Le procédé de la revendication 7, incluant une compensation par le centre répartiteur, pour chaque exploitant, entre les prestations facturées au centre répartiteur par cet exploitant et les prestations refacturées à cet exploitant par le centre répartiteur.
